# EUROPÄISCHE PATENTSCHRIFT

(11) **EP 4 007 157 B1**
(45) Veröffentlichungstag und Bekanntmachung des Hinweises auf die Patenterteilung: **14.08.2024**
(21) Anmeldenummer: 20306457.1
(22) Anmeldetag: 27.11.2020
(51) Int. Cl.: H02P 6/00, H02P 25/062

(54) **LINEARMOTORSYSTEM UND VERFAHREN ZUM BETRIEB EINES SOLCHEN**
LINEAR MOTOR SYSTEM AND METHOD OF OPERATING SUCH A SYSTEM
SYSTÈME DE MOTEUR LINÉAIRE ET MÉTHODE DE FONCTIONNEMENT D'UN TEL SYSTÈME

(43) Veröffentlichungstag der Anmeldung: 01.06.2022
(73) Patentinhaber: Schneider Electric Industries SAS, 92500 Rueil-Malmaison (FR)
(72) Erfinder: Leibl, Thomas, 77960 Seelbach (DE)
(74) Vertreter: Manitz Finsterwald Patent- und Rechtsanwaltspartnerschaft mbB

(56) Entgegenhaltungen:
- EP-A1- 3 487 049
- EP-A1- 3 653 551
- DE-U1- 202016 104 643

## Beschreibung

Die vorliegende Erfindung betrifft ein Linearmotorsystem, insbesondere ein Transportsystem, wie beispielsweise einen Multicarrier. Das Linearmotorsystem umfasst eine Führungsbahn mit einer Mehrzahl von entlang der Führungsbahn verteilt angeordneten Elektromagneten, welche von einem Stromversorgungsnetz mit elektrischer Energie versorgt werden. Wenigstens ein Läufer des Linearmotorsystems ist an der Führungsbahn geführt und entlang der Führungsbahn bewegbar. Der Läufer umfasst einen Antriebsmagneten zum Zusammenwirken mit den Elektromagneten der Führungsbahn, um den Läufer zu bewegen. Das Linearmotorsystem umfasst ferner eine Steuerungseinrichtung zur Steuerung der Bewegung des Läufers relativ zur Führungsbahn. Die Steuerung der Bewegung wird durch Bestromung zumindest eines oder nur eines Teils der Elektromagneten mittels eines Antriebsstroms bewirkt.

Solche Linearmotorsysteme und beispielsweise Multicarrier dienen in industriellen Prozessen dazu, Werkstücke zu transportieren und beispielsweise von einem Bearbeitungsschritt zum nächsten zu überführen. Hierzu können die Läufer eines solchen Multicarriers separat voneinander bewegt werden, indem die Elektromagneten der Führungsbahn jeweils unterschiedlich angesteuert werden, um die jeweilige Bewegung des Läufers zu bewirken.

Durch Beschleunigungs- und Bremsbewegungen der Läufer kann sich die benötigte elektrische Leistung des Linearmotorsystems jeweils verändern, wodurch Strom- und Spannungsschwankungen in dem Stromversorgungsnetz auftreten können. Häufig werden die Elektromagneten auch über Schaltwandler aus dem Stromversorgungsnetz mit elektrischer Energie versorgt, wobei diese Schaltwandler zusammen mit den Elektromagneten dann als Last mit konstanter Leistung wirken. Eine solche Last mit konstanter Leistung kann wie eine negative Impedanz wirken und Oszillationen in dem Stromversorgungsnetz auslösen.

Solche Oszillationen und/oder Strom- und Spannungsschwankungen sind unerwünscht und werden herkömmlicherweise z.B. durch das Vorsehen von großen Pufferkapazitäten in dem Linearmotorsystem oder durch die Integration von aktiven Konvertern reduziert. In beiden Fällen ist nachteiligerweise die Integration von zusätzlichen Komponenten in das Linearmotorsystem notwendig, wodurch sich der benötigte Bauraum erhöhen kann. Zudem können die Herstellungskosten für das Linearmotorsystem steigen.

Ein Linearmotorsystem gemäß dem Oberbegriff des Anspruchs 1 ist aus der DE 20 2016 104 643 U1 bekannt. Die EP 3 653 551 A1 und die EP 3 487 049 A1 offenbaren Hintergrundinformationen zu Linearmotorsystemen.

Es ist die der Erfindung zugrundeliegende Aufgabe, ein Linearmotorsystem anzugeben, welches eine vereinfachte Reduktion von Oszillationen und/oder Strom- und Spannungsschwankungen in dem Stromversorgungsnetz ermöglicht.

Diese Aufgabe wird durch ein Linearmotorsystem gemäß Anspruch 1 gelöst.

Erfindungsgemäß ist die Steuerungseinrichtung dazu eingerichtet, zumindest einen Teil der Elektromagneten derart mit einem Dämpfungsstrom zu bestromen, dass die Bestromung mit dem Dämpfungsstrom einerseits in keiner zusätzlichen Bewegung und/oder keiner Veränderung der durch den Antriebsstrom erzeugten Bewegung des Läufers entlang der Führungsbahn resultiert und/oder andererseits in keiner zusätzlichen Kraft auf den Läufer und/oder keiner Veränderung der durch den Antriebsstrom erzeugten Kraft auf den Läufer, insbesondere entlang der Führungsbahn, resultiert. Dabei wird die Bestromung mit dem Dämpfungsstrom ausgeführt, um Oszillationen und/oder Strom- und Spannungsschwankungen in dem Stromversorgungsnetz zu reduzieren.

Die Erfindung setzt also auf der Erkenntnis auf, dass (Dämpfungs-)Strom in die Elektromagneten (genauer gesagt in die Spulen der Elektromagneten) eingeprägt werden kann, um elektrische Leistung zwischenzuspeichern, wodurch wiederum z.B. punktuelle Belastungen und/oder Oszillationen in dem Stromversorgungsnetz reduziert werden können. Die elektrische Leistung kann dementsprechend als magnetische Energie im Magnetfeld des jeweiligen Elektromagneten gespeichert werden. Die Elektromagneten sind bevorzugt Spulen mit weichmagnetischem Kern. Der Dämpfungsstrom kann so gesteuert werden, dass er eine Dämpfung von Oszillationen und/oder Strom- und/oder Spannungsschwankungen in dem Stromversorgungsnetz bewirkt.

Der Dämpfungsstrom kann beispielsweise dazu verwendet werden, überschüssige Energie in dem Stromversorgungsnetz zu verbrauchen und/oder fehlende Energie von der Speicherung in den Elektromagneten zurück in das Stromversorgungsnetz zu transferieren. Der Dämpfungsstrom kann also sowohl zur Energiespeicherung (Energieübertragung an die Elektromagneten) als auch zur Energierückgewinnung (Rückspeisung von elektrischer Energie aus den Elektromagneten in das Stromversorgungsnetz) eingesetzt werden.

Durch den Dämpfungsstrom erfolgt keine zusätzliche oder veränderte Bewegung der Läufer und/oder keine zusätzliche oder veränderte Krafteinwirkung auf die Läufer entlang der Führungsbahn. Anders ausgedrückt wird die durch den Antriebsstrom bewirkte Bewegung (oder die Ruhe) des jeweiligen Läufers entlang der Führungsbahn durch den Dämpfungsstrom unverändert belassen. Unverändert bedeutet dabei, dass keine für einen Benutzer merkliche Veränderung erfolgt und/oder dass die Änderung unterhalb eines vorbestimmten Schwellenwerts liegt.

Beispielsweise kann eine Geschwindigkeitsveränderung unter 3%, 1 % oder bevorzugt unter 0,1% der durch den Antriebsstrom bewirkten Geschwindigkeit liegen. Bei einem ruhenden Läufer darf die Positionsverschiebung durch den Dämpfungsstrom nicht größer als z.B. 3%, 1% oder 0,1% der Länge des Läufers entlang der Führungsbahn sein.

Der Dämpfungsstrom kann allerdings dazu führen, dass der Läufer quer zur Führungsbahn stärker oder schwächer zu dem jeweiligen Elektromagneten hingezogen wird.

Erfindungsgemäß ist von Vorteil, dass die Dämpfung von Oszillationen und/oder Strom- und/oder Spannungsschwankungen durch schon im Linearmotorsystem enthaltene Komponenten erfolgen kann, insbesondere durch die ohnehin vorhandene elektrische Ansteuerung der Elektromagneten. Hierdurch können zusätzliche Bauteile, wie beispielsweise große Pufferkapazitäten, entfallen.

Vorteilhafte Weiterbildungen der Erfindung sind der Beschreibung, den Zeichnungen sowie den Unteransprüchen zu entnehmen.

Gemäß einer Ausführungsform ist die Steuerungseinrichtung außerdem dazu eingerichtet, zumindest einen Teil derjenigen Elektromagneten mittels des Dämpfungsstroms zu bestromen, welche zu einem jeweiligen Zeitpunkt keine Bewegung, insbesondere entlang der Führungsbahn, des Läufers bewirken. Beispielsweise können Elektromagneten mit dem Dämpfungsstrom beaufschlagt werden, welche zu weit vom Läufer entfernt sind, um eine Bewegung des Läufers zu initiieren. Dabei ist natürlich zu berücksichtigen, dass näher am Läufer angeordnete Elektromagneten mit weniger Dämpfungsstrom, weiter vom Läufer entfernte Elektromagneten dafür mit mehr Dämpfungsstrom beaufschlagt werden können, ohne eine Bewegung des Läufers zu bewirken.

Der Grundgedanke ist hierbei, momentan "ungenutzte" Elektromagneten zur Zwischenspeicherung elektrischer Energie zu verwenden. Dementsprechend kann eine Ausführungsform auch vorsehen, dass die Steuerungseinrichtung dazu ausgebildet ist, den Dämpfungsstrom in Elektromagneten einzuprägen, welche zu einem jeweiligen Zeitpunkt - bei einer herkömmlichen Ansteuerung der Elektromagneten ohne Dämpfungsstrom - nicht von Antriebsstrom durchflossen werden.

Gemäß einer erfindungsgemäßen Ausführungsform ist die Steuerungseinrichtung dazu ausgebildet, den Dämpfungsstrom in Elektromagneten einzuprägen, welche auch mit Antriebsstrom bestromt werden, d.h. der Dämpfungsstrom kann in einen oder mehreren Elektromagneten eingeprägt werden, die momentan bereits von Antriebsstrom durchflossen sind. Durch den Dämpfungsstrom eines Elektromagneten allein, würde dann üblicherweise eine Bewegung des Läufers und/oder eine Kraft auf den Läufer verändert, weshalb in diesem Fall auch Dämpfungsstrom in zumindest einen weiteren Elektromagneten eingeprägt werden kann, so dass der Dämpfungsstrom in allen Elektromagneten (in der Nähe eines jeweiligen Läufers) im Ergebnis keine Veränderung der Bewegung bzw. keine zusätzliche Bewegung des Läufers erzeugt.

Gemäß einer Ausführungsform kann die Steuerungseinrichtung also dazu ausgebildet sein, in zumindest einem der Elektromagneten mittels des Dämpfungsstroms den Antriebsstrom zu reduzieren und dafür in einen benachbarten Elektromagneten Dämpfungsstrom einzuprägen, um eine veränderte Krafteinwirkung auf den Läufer durch den reduzierten Antriebsstrom zu kompensieren. Dies kann beispielsweise dann erfolgen, wenn der Antriebsstrom in einem sehr nahe am Läufer befindlichen Elektromagneten durch den Dämpfungsstrom reduziert wird. Die daraus resultierende geringere Kraft auf den Läufer kann dann insbesondere durch einen weiter entfernten Elektromagneten ausgeglichen werden, welcher mit Dämpfungsstrom bestromt wird und so die geringere Kraft auf den Läufer ausgleicht. Aufgrund der größeren Distanz des Elektromagneten, welcher rein mit Dämpfungsstrom bestromt ist, ist dort ein größerer Strom notwendig. Durch den größeren Strom kann dann wiederum elektrische Energie gepuffert werden, um Oszillationen in dem Stromversorgungsnetz zu dämpfen.

Es ist also ersichtlich, dass der Antriebsstrom und der Dämpfungsstrom gemäß der Erfindung sich in einem oder mehreren Elektromagneten überlagern. Der resultierende Strom aus Antriebsstrom und Dämpfungsstrom bewirkt dann ein Magnetfeld, welches wiederum eine Kraft auf den Antriebsmagneten des Läufers ausübt und auf diese Weise zu einer Bewegung des Läufers führt. Als Bewegung ist in diesem Zusammenhang beispielsweise ein Beschleunigen, Abbremsen oder auch ein Fahren mit konstanter Geschwindigkeit gemeint. Auch ein Festhalten des Läufers in einer vorgegebenen Position kann durch den Antriebsstrom bzw. durch den resultierenden Strom bewirkt werden. Es versteht sich, dass die Dämpfungsströme insgesamt (d.h. die Dämpfungsströme in allen Spulen) (nahezu) keine Änderung der Bewegung und/oder der Kraft auf den Läufer, insbesondere nur in Bewegungsrichtung, bewirken soll.

Gemäß einer weiteren Ausführungsform ist der in die Elektromagneten eingeprägte Antriebsstrom und Dämpfungsstrom zusammengenommen zumindest zeitweise größer, als der Antriebsstrom allein, wobei durch den größeren Gesamtstrom Energie in den Elektromagneten gespeichert wird. Der Antriebsstrom ist, wie vorstehend schon angedeutet, der Strom, welcher üblicherweise (d.h. ohne Dämpfungsstrom) zum normalen Betrieb (d.h. zur Bewegung der Läufer) in die Elektromagneten eingeprägt wird. Da zumindest zeitweise zusätzliche Energie aus dem Stromversorgungsnetz in den Elektromagneten gepuffert wird, ergibt sich, dass der Gesamtstrom für die Elektromagneten zumindest zeitweise (d.h. während der Pufferung überschüssiger Energie) größer ist, als es der Antriebsstrom alleine wäre.

Gemäß einer weiteren Ausführungsform sind die Elektromagneten mittels Schaltwandlern an das Stromversorgungsnetz angeschlossen, wobei die Schaltwandler bevorzugt jeweils als Last mit konstanter Leistung wirken. Die Schaltwandler, genauer gesagt die Schaltwandler zusammen mit den an diese jeweils angeschlossenen Elektromagneten, können somit als sogenannte "Constant Power Load" (CPL) und damit als negative Impedanz wirken, wodurch Oszillationen verstärkt werden können. Die Oszillationen können beispielsweise im Zusammenwirken mit ohnehin im Stromversorgungsnetz und/oder in dem Linearmotorsystem vorhandenen Kapazitäten oder Induktivitäten entstehen. Die Schaltwandler sind bevorzugt zwischen dem Stromversorgungsnetz und den Elektromagneten angeordnet. Bei den Schaltwandlern kann es sich insbesondere um DC-DC-Wandler, aber auch um AC-DC-Wandler handeln.

Wie nachfolgend ausgeführt, kann das Linearmotorsystem in mehrere Segmente gegliedert sein. Bevorzugt kann in jedem Segment und/oder pro Spule bzw. Elektromagnet ein separater Schaltwandler vorgesehen sein.

Gemäß einer weiteren Ausführungsform ist das Stromversorgungsnetz ein Gleichspannungsnetz mit einer Spannung von bevorzugt weniger als 80 V oder weniger als 60 V. Bei dem Stromversorgungsnetz kann es sich also um ein sogenanntes DC-Grid handeln. Mehrere und bevorzugt alle der Schaltwandler des Linearmotorsystems können in Parallelschaltung an das Stromversorgungsnetz angeschlossen sein. Das Stromversorgungsnetz kann hierzu insbesondere eine Stromversorgungsschiene oder dergleichen umfassen, an welche die Schaltwandler, insbesondere direkt, elektrisch angeschlossen sind. Die Schaltwandler können bevorzugt in Parallelschaltung an das Stromversorgungsnetz angeschlossen sein.

Gemäß einer weiteren Ausführungsform ist die Steuerungseinrichtung dazu eingerichtet, zur Auswahl zumindest eines Elektromagneten, welcher mit Dämpfungsstrom bestromt werden soll, eine durch den Läufer bei Bewegung des Läufers in mehreren der Elektromagneten hervorgerufene Induktionsspannung (EMK - elektromotorische Kraft) zu berücksichtigen. Die Steuerungseinrichtung kann die Induktionsspannung messen und/oder berechnen bzw. auf andere Art und Weise ermitteln. Die Messung erfolgt dann, wenn der Läufer in Bewegung ist. Eine einmal vorgenommene Messung kann abgespeichert und für ähnliche Läuferpositionen und/oder Läufergeschwindigkeiten wiederverwendet werden. Anhand der Induktionsspannung kann dann festgelegt werden, welche Elektromagneten anschließend mit Dämpfungsstrom bestromt werden.

Die Höhe des Betrags der Induktionsspannung ist ein Maß dafür, wie effizient ein Stromfluss in einem Elektromagneten eine Kraft auf den Läufer erzeugt. Beispielsweise können solche Elektromagneten für das Bestromen mit Dämpfungsstrom vorgesehen werden, in welchen der Betrag der Induktionsspannung unter einem vorbestimmten Schwellenwert liegt. Der vorgesehene Elektromagnet kann dann mit Dämpfungsstrom bestromt werden.

Es versteht sich, dass die Induktionsspannungen für verschiedene Elektromagneten gleichzeitig erfasst werden können.

Alternativ oder zusätzlich kann für zumindest zwei Paare von mehr Elektromagneten ein Verhältnis der Induktionsspannungen bestimmt werden. Umgekehrt proportional zum Verhältnis kann dann ein Dämpfungsstrom in den Elektromagneten eingeprägt werden.

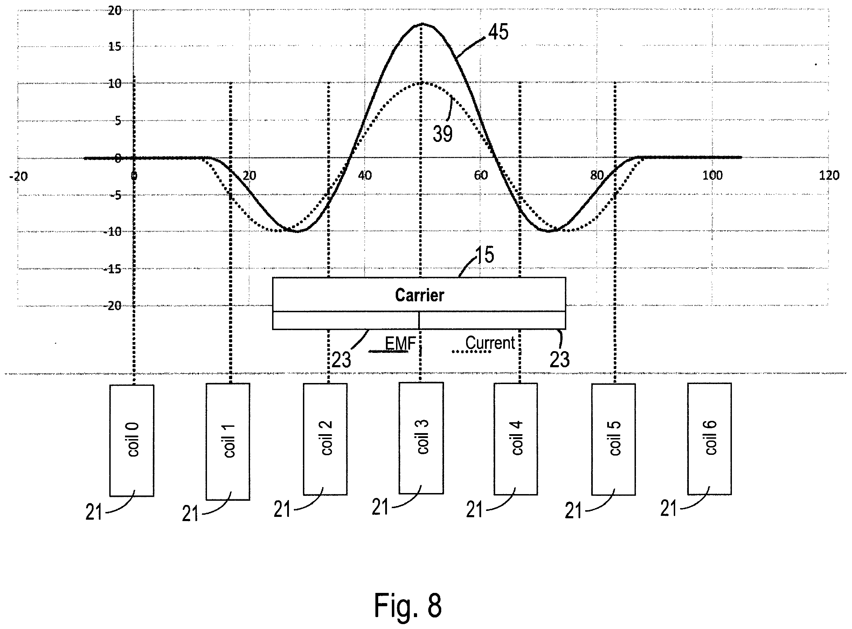

Insbesondere kann zunächst die Induktionsspannung für einen Elektromagneten bestimmt werden, woraufhin dann die Induktionsspannung zumindest eines weiteren Elektromagneten ins Verhältnis gesetzt wird. Übersteigt das Verhältnis (bzw. der Betrag des Verhältnisses) einen vorbestimmten Schwellenwert, kann der Elektromagnet mit der (betragsmäßig) kleineren Induktionsspannung für das Bestromen mit Dämpfungsstrom vorgesehen und anschließend mit Dämpfungsstrom bestromt werden. Beispielsweise kann in einem ersten Elektromagneten eine Spannung von 18 V bei der Bewegung eines Läufers induziert werden. Der erste Elektromagnet kann sich z.B. sehr nahe an dem Antriebsmagneten des Läufers befinden. Eine Induktionsspannung in einem zweiten Elektromagneten, welcher z.B. weiter von dem Antriebsmagneten entfernt ist, kann rein beispielhaft hingegen nur -1,56 V betragen. Das Verhältnis der Beträge ergibt sich folglich zu 11,5. Wird nun ein Verhältnis von zumindest 10 als vorbestimmter Schwellenwert angenommen, so wird nun der zweite Elektromagnet für die Bestromung mit Dämpfungsstrom vorgesehen. Ebenfalls ist es möglich, die Induktionsspannungen für zwei zweite Elektromagneten zu bestimmen, welche insbesondere symmetrisch zu dem ersten Elektromagneten angeordnet sind. Wird nun im Zuge der Bestromung mit Dämpfungsstrom der resultierende Strom in dem ersten Elektromagneten um z.B. 5% verringert, so kann der resultierende Strom in den beiden zweiten Elektromagneten um das Verhältnis der Beträge stärker erhöht werden, also z.B. um 5% * 11,5 = 57,5 %. Dies ist später auch noch unter Bezugnahme auf Fig. 8 beschrieben.

Gemäß einer weiteren Ausführungsform ist die Steuerungseinrichtung dazu ausgebildet, zumindest zeitweise einen negativen Dämpfungsstrom für zumindest einen der Elektromagneten zu erzeugen, um elektrische Energie in das Stromversorgungsnetz einzuspeisen. Alternativ oder zusätzlich kann die Steuerungseinrichtung dazu eingerichtet sein, zumindest zeitweise einen positiven Dämpfungsstrom für zumindest einen Elektromagneten zu erzeugen, um elektrische Energie aus dem Stromversorgungsnetz abzuführen. Wie oben bereits kurz ausgeführt, kann die in den Elektromagneten gespeicherte Energie also auch wieder in das Stromversorgungsnetz zurückgespeist werden, wodurch ebenfalls eine Reduktion von Oszillationen und/oder Strom- und/oder Spannungsschwankungen erzielt werden kann. Durch das Einspeisen bzw. Rückspeisen der elektrischen Energie können auch Lastspitzen z.B. beim Anfahren oder starken Beschleunigen der Läufer abgedeckt werden.

Gemäß einer weiteren Ausführungsform weist das Linearmotorsystem mehrere Segmente auf, welche jeweils mehrere der Elektromagneten umfassen, wobei die Steuerungseinrichtung bevorzugt auf mehrere der Segmente verteilt ist. Die Segmente bzw. die Teile der Steuerungseinrichtung können jeweils untereinander kommunizieren. Dies erfolgt bevorzugt mit einer Segment-zu-Segment-Kommunikation (S2S), beispielsweise mittels eines Feldbusses (z.B. Sercos). Der Dämpfungsstrom kann entweder pro Segment berechnet und erzeugt werden, wobei die Steuerungseinrichtung eines Segments entweder nur die Elektromagneten ihres jeweiligen Segments ansteuern kann oder alternativ auch das Einprägen von Dämpfungsstrom in Elektromagneten anderer Segmente veranlassen kann. Es ist ebenfalls möglich, dass die Steuerungseinrichtung der verschiedenen Segmente den Dämpfungsstrom gemeinsam ermitteln und an verschiedene Elektromagneten zuweisen.

Gemäß einer weiteren Ausführungsform ist zumindest ein Sensor vorgesehen, wobei der Sensor den Strom und/oder die Spannung in dem Stromversorgungsnetz detektiert und in ein Sensorsignal umwandelt. Das Sensorsignal kann dann die Grundlage für die Erzeugung des Dämpfungsstroms sein. Es ist ebenfalls möglich, dass in jedem Segment oder in mehreren Segmenten ein separater Sensor vorhanden ist, um positionsabhängig Oszillationen und/oder Strom- und Spannungsschwankungen in dem Stromversorgungsnetz zu detektieren. Der jeweilige Sensor kann dann mit der in dem jeweiligen Segment vorgesehenen Steuerungseinrichtung gekoppelt sein.

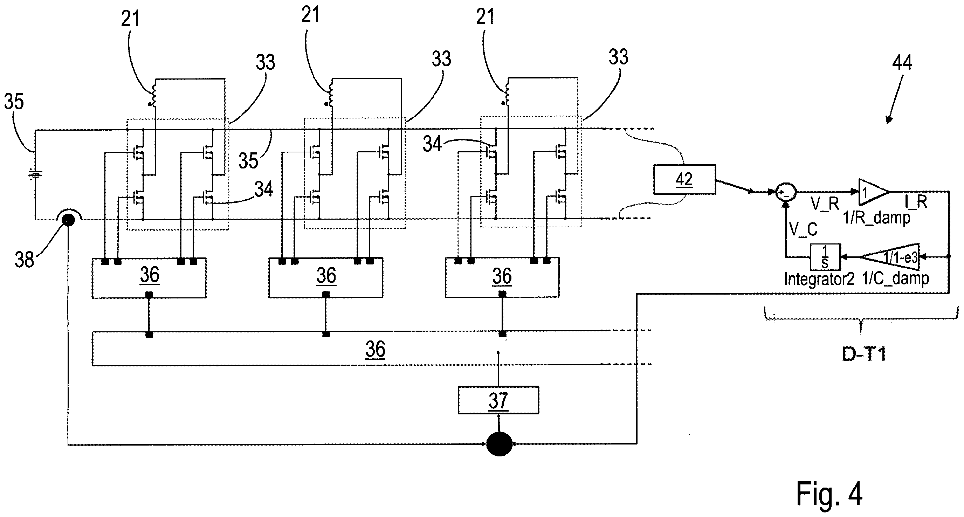

Gemäß einer weiteren Ausführungsform umfasst die Steuerungseinrichtung einen Regelkreis zur Erzeugung des Dämpfungsstroms, wobei der Regelkreis eine Nachbildung einer negativen Impedanz und eine Nachbildung eines Dämpfungsglieds umfasst, wie auch noch näher unter Bezugnahme auf Fig. 4 erläutert ist. Die Nachbildung kann jeweils ein Modell, z.B. ein Simulationsmodell oder ein mathematisches Modell sein. Bevorzugt gibt der Regelkreis ein Regelsignal aus, welches als Basis für den Dämpfungsstrom dient. Das vorgenannte Sensorsignal kann ein Eingangssignal für den Regelkreis sein. Ein Ausgangswert der Nachbildung des Dämpfungsglieds und/oder der negativen Impedanz können in dem Regelkreis jeweils dem Eingangssignal überlagert werden. Dies bedeutet die Ausgangswerte können zu dem Eingangssignal rückgekoppelt werden. Durch das Vorsehen der Nachbildung der negativen Impedanz und der Nachbildung des Dämpfungsglieds können gleichzeitig die Wirkung der Lasten mit konstanter Leistung und eines gewünschten Dämpfungseffekts (der zum Beispiel einem großen Pufferkondensator entsprechen kann) in dem Regelkreis nachgebildet werden. Das vom Regelkreis ausgegebene Regelsignal bewirkt dann automatisch, dass durch den Dämpfungsstrom der gewünschte Dämpfungseffekt (z.B. die Reduktion von Oszillationen) erzielt wird. Eine aufwendigere Berechnung des Dämpfungsstroms kann durch das einfache Vorsehen der Nachbildung des Dämpfungsglieds im Regelkreis entfallen.

Der Regelkreis ist bevorzugt in der Steuerungseinrichtung angeordnet und beispielsweise durch Software realisiert. Gemäß einer weiteren Ausführungsform umfasst der Regelkreis eine Logik, welche aus einem Regelsignal, insbesondere basierend auf weiteren Randbedingungen, den Dämpfungsstrom für die Elektromagneten festlegt. Aus dem Regelsignal kann sich insbesondere ergeben, wie groß der Dämpfungsstrom zu einem jeweiligen Zeitpunkt sein soll.

Bei der Bestimmung des Dämpfungsstroms, insbesondere durch den Regelkreis, kann auch eine vom Antriebsmagneten des Läufers in die Elektromagneten induzierte Spannung und/oder ein induzierter Strom (sogenannte "Back-EMF") berücksichtigt werden.

Wie vorstehend erläutert, kann der Dämpfungsstrom aber auf verschiedene Weisen realisiert werden, beispielsweise durch Einprägen in momentan nicht verwendete Spulen oder durch entsprechende Veränderung des Antriebsstroms in mehreren Spulen. Die Logik kann nun die genaue Größe und Verteilung des Dämpfungsstroms festlegen. Als Randbedingungen können dafür beispielsweise die momentanen Spulentemperaturen, die momentane Leistung, die Bewegungsrichtung der Läufer und dergleichen herangezogen werden. Beispielsweise können bereits stärk erwärmte Spulen nicht für den Dämpfungsstrom in Betracht gezogen werden, um diese nicht noch weiter aufzuheizen. Auch kann der Dämpfungsstrom z.B. in Spulen eingeprägt werden, welche nicht demnächst (basierend auf der Bewegungsrichtung der Läufer) zur Bewegung des Läufers mittels Antriebsstrom herangezogen werden müssen.

Gemäß einer weiteren Ausführungsform umfasst das Linearmotorsystem mehrere Segmente, wobei jedes Segment mehrere der Elektromagneten umfasst, wobei die Segmente aneinandergereiht angeordnet sind und eine umlaufende Führungsbahn bilden, wobei die Führungsbahn an einer Außenseite der jeweiligen Segmente angeordnet ist. Die Segmente können beispielsweise jeweils über ein eigenes Gehäuse verfügen und z.B. mittels Steckverbindern elektrisch miteinander kontaktiert sein. An der Außenseite der Segmente können beispielsweise zwei mechanische Führungsschienen angeordnet sein, auf welchen Rollen der Läufer entlangfahren, um die Läufer entlang der Führungsbahn zu führen. Zwischen den beiden Führungsschienen können die Elektromagneten angeordnet sein, wobei die Läufer mit den Antriebsmagneten zu der Führungsbahn hin gezogen werden. Die Läufer können jeweils eine Abwinklung umfassen, so dass die Läufer eine Befestigungsfläche aufweisen, welche auf der Oberseite der Segmente entlanggeführt wird und zur Aufnahme und/oder zum Transport von Werkstücken dient.

Die Führungsbahn ist bevorzugt umlaufend ausgebildet, so dass die Läufer grundsätzlich unendlich in derselben Richtung entlang der Führungsbahn bewegt werden könnten. Das Linearmotorsystem umfasst weiter bevorzugt gerade Segmente und Segmente, bei welchen die Führungsbahn eine Kurve beschreibt. Die Elektromagneten sind dementsprechend längs der Führungsbahn entlang einer geraden oder gebogenen Linie angeordnet.

Weiterer Gegenstand der Erfindung ist ein Verfahren zum Betrieb eines Linearmotorsystems gemäß Anspruch 14.

Die zum erfindungsgemäßen Linearmotorsystem getroffenen Aussagen gelten für das erfindungsgemäße Verfahren entsprechend. Dies gilt insbesondere hinsichtlich Vorteilen und Ausführungsformen.

Nachfolgend wird die Erfindung rein beispielhaft unter Bezugnahme auf die Zeichnungen beschrieben. Es zeigen:
- Fig. 1: ein als Transportsystem ausgebildetes Linearmotorsystem,
- Fig. 2: einen Kurvenabschnitt des Linearmotorsystems von Fig. 1,
- Fig. 3: eine perspektivische Schnittansicht des Linearmotorsystems von Fig. 1 mit Schnittebene senkrecht zur Führungsbahn,
- Fig. 4: eine schematische Darstellung der Schaltung zur Regelung des Stroms in den Elektromagneten,
- Fig. 5: eine schematische Darstellung der Elektromagneten des Transportsystems zusammen mit einem Diagramm eines Dämpfungsstroms, welcher in vom Läufer entfernte Elektromagneten eingeprägt wird,
- Fig. 6: das Einprägen eines Dämpfungsstroms in Elektromagneten ohne Krafteinwirkung auf den Läufer und
- Fig. 7: die Veränderung des Antriebsstroms durch einen Dämpfungsstrom,
- Fig. 8: die Auswahl eines Elektromagneten für den Dämpfungsstrom anhand eines induzierten Stroms.

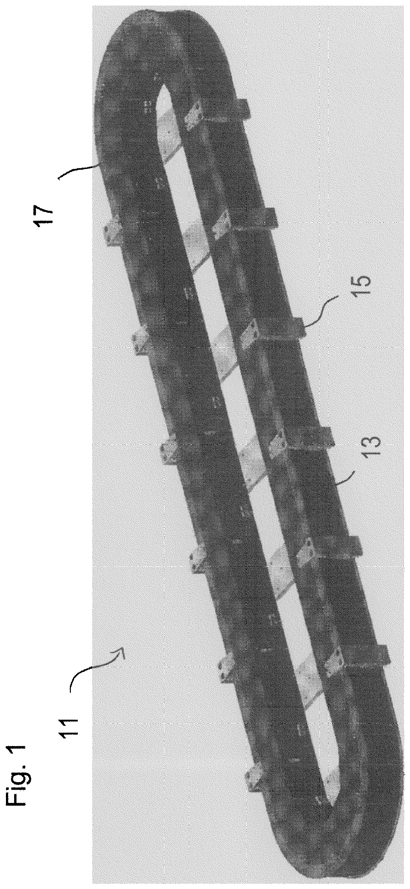

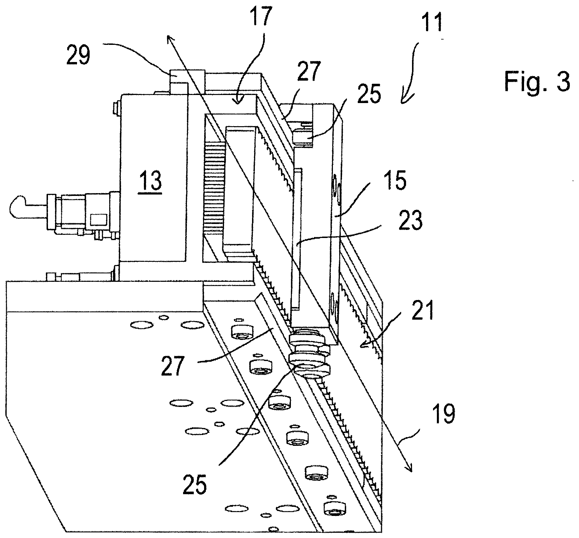

Ein Linearmotorsystem 11, das als Multi-Carrier-System ausgebildet ist, ist in Fig. 1 dargestellt. Das Linearmotorsystem 11 umfasst mehrere Segmente 13, die aneinandergereiht angeordnet sind, so dass eine durchgehende und in diesem Fall umlaufende Bewegung der Läufer 15 entlang einer Führungsbahn 17 ermöglicht ist. Ferner umfasst das Transportsystem 11 mehrere Läufer 15, die einzelne Transportelemente des Transportsystems 11 bilden und die mittels der (z.B. in Fig. 3 gezeigten) Elektromagneten in den Segmenten 13 entlang der Führungsbahn 17 unabhängig voneinander bewegt werden können. Die Segmente 13 bilden zusammen mit den Läufern 15 einen Linearmotor.

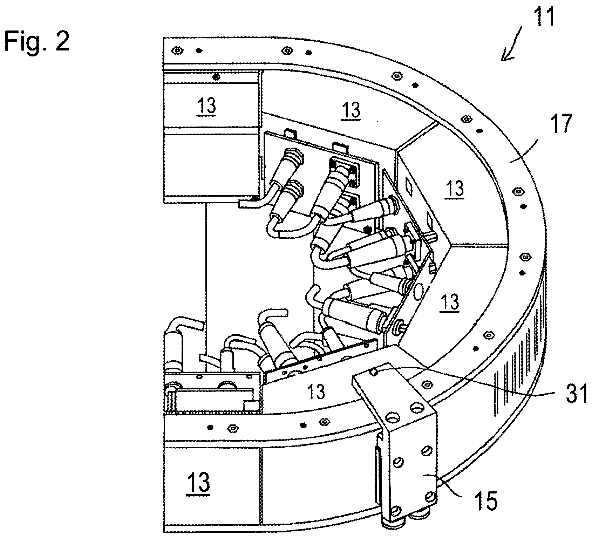

Fig. 2 zeigt einen Kurvenabschnitt des Linearmotorsystems 11 in vergrößerter Ansicht. Hier ist lediglich ein Läufer 15 dargestellt, der mittels der Segmente 13 entlang der Führungsbahn 17 bewegbar ist. Auf der dem Läufer 15 abgewandten Seite der Führungsbahn 17, d.h. innerhalb des Kurvenabschnitts, sind verschiedene elektronische Einrichtungen zur Ansteuerung der Segmente 13 sichtbar.

In Fig. 3 ist das Linearmotorsystem 11 in einer Schnittansicht und vergrößert dargestellt. Es ist ein Läufer 15 sichtbar, der an der Führungsbahn 17 beweglich geführt ist. Dabei ist der Läufer 15 entlang einer Führungsachse 19 oder Bewegungsachse bewegbar. Zu einer Bewegung entlang der Führungsachse 19 wird der Läufer 15 durch eine Vielzahl von Elektromagneten 21 angesteuert, die an der Führungsbahn 17 angeordnet und entlang dieser gleichmäßig verteilt sind. Die Elektromagnete 21 wirken dabei mit einem am Läufer 15 angeordneten Permanentmagneten 23, der auch als Antriebsmagnet bezeichnet werden kann, zum Antrieb des Läufers zusammen.

Der Läufer 15 ist an der Führungsbahn 17 mechanisch geführt, und zwar durch eine Rollenführung. Diese umfasst Führungsrollen 25 am Läufer 15 und Führungsschienen 27 an der Führungsbahn 17. Der Läufer 15 wird dabei insbesondere über den Permanentmagneten 23 an der Führungsbahn 17 gehalten.

Das Linearmotorsystem 11 umfasst außerdem eine Positionserfassungseinrichtung 29. Diese kann beispielsweise als Reihe von einer Vielzahl von Magnetsensoren ausgebildet sein, die sich entlang der Führungsbahn 17 erstreckt. Am Läufer 15 kann zum Beispiel ein Permanentmagnet 31 vorgesehen sein, der auch als Positionsmagnet bezeichnet werden kann und in Fig. 2 sichtbar ist.

Fig. 4 zeigt eine schematische Darstellung der Schaltung zur Regelung des Stroms in Spulen der Elektromagneten 21. Die Elektromagneten 21 sind jeweils mittels eines eigenen Schaltwandlers 33 mit einem Gleichstrom-Stromversorgungsnetz 35 elektrisch verbunden. Eine Steuerungseinrichtung 37 steuert den Stromfluss durch die Elektromagneten 21, insbesondere durch die in den Schaltwandlern 33 dargestellten Transistoren 34 und eine den Transistoren 34 jeweils vorgeschaltete Ansteuerelektronik 36. Die Transistoren 34 stellen wahlweise eine elektrische Verbindung zwischen dem Stromversorgungsnetz 35 und den Elektromagneten 21 her.

Mit dem Stromversorgungsnetz 35 ist zudem ein Stromsensor 38 und ein Spannungssensor 42 verbunden. Ein Signal des Stromsensors 38 wird der Steuerungseinrichtung 37 zugeführt.

Ein, insbesondere digitalisiertes, Signal des Spannungssensors 42 wird einem Modell 44 aus einer negativen Impedanz ("1/R_damp") und eines Dämpfungskondensators ("1/C_damp") zugeführt. Das Modell des Dämpfungskondensators befindet sich in einer Rückkopplungsschleife und wird von dem Signal des Spannungssensors 42 abgezogen. Das Modell 44 bewirkt zusammen mit einem Regelkreis der Steuerungseinrichtung 37 eine Dämpfung von Oszillationen in dem Stromversorgungsnetz 35. Es versteht sich, dass das Modell 44 in der Steuerungseinrichtung angeordnet und lediglich zum besseren Verständnis extern gezeigt ist.

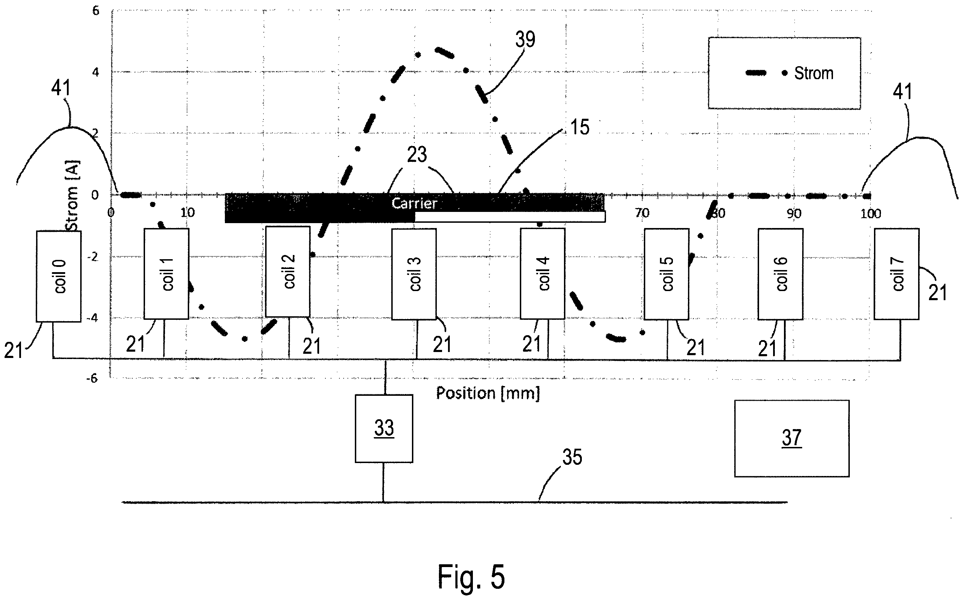

Fig. 5 zeigt die Elektromagneten 21 eines Segments 13 relativ zu dem Läufer 15 bzw. zu dessen Antriebsmagneten 23. Von dem Antriebsmagneten 23 sind dabei der Nord- und Südpol separat dargestellt.

In Fig. 5 ist zudem ein Antriebsstrom 39 über die verschiedenen Elektromagneten 21 dargestellt. Der dargestellte Antriebsstrom 39 ist dabei eine Überlagerung der in den verschiedenen Elektromagneten 21 eingeprägten Ströme, wobei positive und negative Werte die Stromrichtung angeben. Der dargestellte Antriebsstrom 39 führt zu einer Bewegung des Läufers 15.

Es ist zu erkennen, dass die Spulen der Elektromagneten 21, welche in der Fig. 5 am rechten Rand dargestellt sind, nicht mit Antriebsstrom 39 beaufschlagt sind. Diese Elektromagneten 21 sind zu weit vom Läufer 15 entfernt, um eine Krafteinwirkung auf den Läufer 15 zu besitzen. In diese Elektromagneten 21 wird gemäß Fig. 5 ein Dämpfungsstrom 41 eingeprägt, welcher Energie aus dem Stromversorgungsnetz 35 in diesen Elektromagneten 21 zwischenspeichert.

Mittels der Positionserfassungseinrichtung 29 können jeweils diejenigen Elektromagneten 21 bestimmt werden, welche gerade mit Antriebsstrom 39 beaufschlagt werden müssen, um den Läufer 15 zu bewegen. Zusätzlich kann die Steuerungseinrichtung 37 auch ausgebildet sein, von dem Antriebsmagneten 23 des Läufers 15 induzierten Strom in den Elektromagneten 21 zu erfassen und daraus die Position der Läufer 15 zu bestimmen bzw. zu verifizieren.

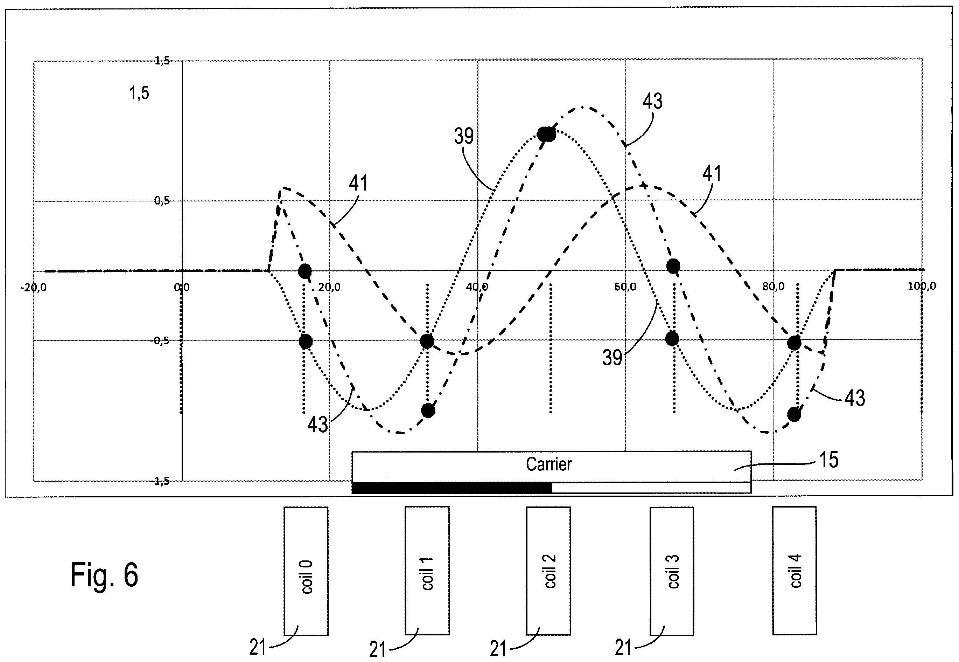

Eine Ausführungsform zur Erzeugung des Dämpfungsstroms 41 ist in der Diagrammen von Fig. 6 gezeigt. Gemäß der Erfindung wird der Dämpfungsstrom 41 in einen oder mehrere Elektromagnete 21 eingeprägt, die auch mit Antriebsstrom 39 beaufschlagt sind. Die gepunktete Linie zeigt einen typischen Verlauf des Antriebsstroms 39, wenn der Läufer 15 mit konstanter Geschwindigkeit und Kraft über die Spule bewegt wird. Der Stromverlauf des Antriebsstroms 39 ist üblicherweise so gewählt, dass die Kraftwirkung aller Elektromagneten 21 zusammen auf den Läufer möglichst linear ist, wobei gleichzeitig ein geringer Gesamtstrom angestrebt wird. Es versteht sich, dass alternative Stromverläufe des Antriebsstroms 39 möglich sind.

In Fig. 6 ist zudem eine Möglichkeit für den Dämpfungsstrom 41 als gestrichelte Linie dargestellt. Der Dämpfungsstrom 41 gilt für den Fall, dass der Läufer 15 mit konstanter Geschwindigkeit über die Elektromagneten 21 fährt, wobei durch den Dämpfungsstrom 41 in Summe keine Kraft auf den Läufer 15 in der Bewegungsrichtung wirkt.

Schließlich ist als Strich-Punkt-Linie noch der resultierende Spulenstrom 43 gezeigt, der sich aus dem Antriebsstrom 39 und dem Dämpfungsstrom 41 als tatsächlich in den Elektromagneten 21 fließender Strom ergibt.

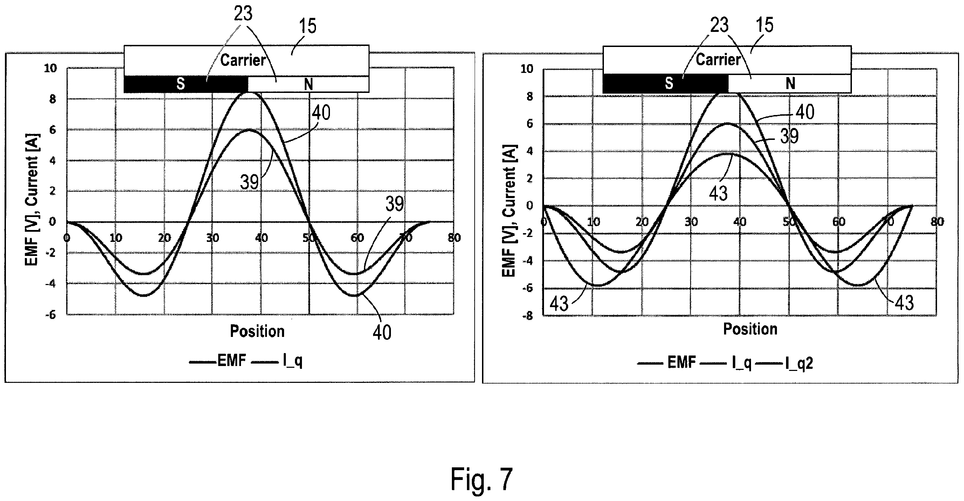

Fig. 7 zeigt eine weitere Ausführungsform zur Implementierung des Dämpfungsstroms 41. Im linken Diagramm von Fig. 7 ist eine "normale" Stromverteilung des Antriebsstroms 39 gezeigt. Ebenfalls ist der induzierte Spulenstrom 40 dargestellt. Durch eine Modifikation des Antriebsstroms 39 durch einen Dämpfungsstrom 41 kann ein resultierender Spulenstrom 43 erzielt werden, welcher im rechten Diagramm von Fig. 7 dargestellt ist. Es ist zu erkennen, dass größere Stromanteile weiter vom Läufer 15 entfernt sind, wobei die Krafteinwirkung auf den Läufer 15 aufgrund der größeren Entfernung gleich bleibt, jedoch aber die Möglichkeit besteht, zusätzliche elektrische Energie in den Elektromagneten 21 des Linearmotorsystems zu speichern.

Fig. 8 zeigt die Auswahl eines Elektromagneten 21 für den Dämpfungsstrom anhand eines induzierten Stroms. Die gepunktete Linie zeigt einen typischen Verlauf des Antriebsstroms 39 (wie auch in Fig. 6), wenn der Läufer 15 mit konstanter Geschwindigkeit und Kraft über die Spule bewegt wird.

Die durchgezogene Linie zeigt einem möglichen Verlauf einer induzierten Spannung (EMK) 45 in den Elektromagneten 21 (d.h. in deren Spulen), wenn ein Läufer 15 mit konstanter Geschwindigkeit über die Elektromagneten 21 bewegt wird. Die Kurvenform der induzierten Spannung 45 ist ein Maß dafür, wie effizient ein Stromfluss in einem Elektromagneten eine Kraft auf den Läufer 15 erzeugt. Bei der gezeigten Läuferposition ist die induzierte Spannung 45 in dem in Fig. 8 "coil 2" genannten Elektromagneten 21 am größten (18 V). In "coil 0" und "coil 4", welche symmetrisch zu "coil 2" angeordnet sind, dagegen deutlich kleiner (-1,56 V). Das Verhältnis der induzierten Spannungen ist 11,5.

Abhängig von dieser Effizienz (d.h. dem Betrag des Werts der induzierten Spannung 45) kann entschieden werden, in welchem Elektromagneten 21 der Antriebsstrom 39 reduziert wird (hier "coil 2"; d.h. negativer Dämpfungsstrom) und in welchem Elektromagneten 21 entsprechen ein positiver Dämpfungsstrom 41 eingeprägt wird (in diesem Beispiel bei "coil 0" und bei "coil 4"). Damit die Kraft auf den Läufer 15 gleich bleibt, kann in dieser Position z.B. der Antriebsstrom 39 in "coil 2" um 5% reduziert werden und in "coil 0" und "coil 4" um 5% * 11,5 = 57,5% erhöht werden. Auf diese Weise wird der gesamte durch die Elektromagneten 21 fließende Strom erhöht, wodurch elektrische Energie in den Elektromagneten 21 gespeichert werden kann.

Durch die Zwischenspeicherung elektrischer Energie in den Elektromagneten 21 können Oszillationen und/oder Strom- und Spannungsschwankungen in dem Stromversorgungsnetz 35 reduziert werden.

### Bezugszeichenliste

- 11: Linearmotorsystem
- 13: Segment
- 15: Läufer
- 17: Führungsbahn
- 19: Führungsachse
- 21: Elektromagneten
- 23: Antriebsmagnet
- 25: Führungsrollen
- 27: Führungsbahn
- 29: Positionserfassungseinrichtung
- 31: Positionsmagnet
- 33: Schaltwandler
- 34: Transistor
- 35: Stromversorgungsnetz
- 36: Ansteuerelektronik
- 37: Steuerungseinrichtung
- 38: Stromsensor
- 39: Antriebsstrom
- 40: induzierter Spulenstrom
- 41: Dämpfungsstrom
- 42: Spannungssensor
- 43: resultierender Spulenstrom
- 44: Modell
- 45: induzierte Spannung

## Patentansprüche

1. Linearmotorsystem (11), insbesondere Transportsystem, z.B. Multicarrier, umfassend:
eine Führungsbahn (17) mit einer Mehrzahl von entlang der Führungsbahn (17) verteilt angeordneten Elektromagneten (21), welche von einem Stromversorgungsnetz (35) mit elektrischer Energie versorgt werden;
wenigstens einen Läufer (15), der an der Führungsbahn (17) geführt und entlang dieser bewegbar ist und einen Antriebsmagneten (23) zum Zusammenwirken mit den Elektromagneten (21) der Führungsbahn (17) zum Bewegen des Läufers (15) umfasst; und
eine Steuerungseinrichtung (37) zur Steuerung der Bewegung des Läufers (15) relativ zur Führungsbahn (17) durch Bestromung eines Teils der Elektromagneten mittels eines Antriebsstroms (39),
wobei die Steuerungseinrichtung (37) dazu eingerichtet ist, zumindest einen Teil der Elektromagneten (21) derart mit einem Dämpfungsstrom (41) zu bestromen, dass die Bestromung mit dem Dämpfungsstrom (41) einerseits in keiner zusätzlichen Bewegung und/oder keiner Veränderung der durch den Antriebsstrom (39) erzeugten Bewegung des Läufers (15) entlang der Führungsbahn (17) resultiert und/oder andererseits in keiner zusätzlichen Kraft auf den Läufer (15) und/oder keiner Veränderung der durch den Antriebsstrom (39) erzeugten Kraft auf den Läufer (15), insbesondere entlang der Führungsbahn (17), resultiert,
wobei die Bestromung mit dem Dämpfungsstrom (41) ausgeführt wird, um Oszillationen und/oder Strom- und Spannungsschwankungen in dem Stromversorgungsnetz (35) zu reduzieren,
**dadurch gekennzeichnet, dass**
der Antriebsstrom (39) und der Dämpfungsstrom (41) sich in einem oder mehreren Elektromagneten (21) überlagern.

2. Linearmotorsystem (11) nach Anspruch 1,
**dadurch gekennzeichnet,**
**dass** die Steuerungseinrichtung (37) dazu eingerichtet ist, zumindest einen Teil derjenigen Elektromagneten (21) mittels des Dämpfungsstroms (41) zu bestromen, welche zu einem jeweiligen Zeitpunkt keine Bewegung des Läufers (15), insbesondere entlang der Führungsbahn (17), bewirken.

3. Linearmotorsystem (11) nach Anspruch 1 oder 2,
**dadurch gekennzeichnet,**
die Steuerungseinrichtung (37) dazu ausgebildet ist, den Dämpfungsstrom (41) in Elektromagneten einzuprägen, welche zu einem jeweiligen Zeitpunkt nicht von Antriebsstrom (39) durchflossen werden.

4. Linearmotorsystem (11) nach Anspruch 1 oder 2,
**dadurch gekennzeichnet,**
**dass** die Steuerungseinrichtung (37) dazu eingerichtet ist, den Dämpfungsstrom (41) in Elektromagneten (21) einzuprägen, welche auch mit Antriebsstrom (39) bestromt werden.

5. Linearmotorsystem (11) nach einem der vorstehenden Ansprüche 1, 2 oder 4, **dadurch gekennzeichnet,**
**dass** die Steuerungseinrichtung (37) dazu eingerichtet ist, in zumindest einem der Elektromagneten (21) mittels des Dämpfungsstroms (41) den Antriebsstrom (39) zu reduzieren und dafür in einen benachbarten Elektromagneten (21) Dämpfungsstrom (41) einzuprägen, um eine veränderte Krafteinwirkung auf den Läufer (15) durch den reduzierten Antriebsstrom (39) zu kompensieren.

6. Linearmotorsystem (11) nach einem der vorstehenden Ansprüche, **dadurch gekennzeichnet,**
**dass** der in die Elektromagneten (21) eingeprägte Antriebsstrom (39) und Dämpfungsstrom (41) zusammengenommen zumindest zeitweise größer ist, als der Antriebsstrom (39) allein, wobei durch den größeren Gesamtstrom Energie in den Elektromagneten (21) gespeichert wird.

7. Linearmotorsystem (11) nach einem der vorstehenden Ansprüche,
**dadurch gekennzeichnet,**
**dass** die Elektromagneten (21) mittels Schaltwandlern an das Stromversorgungsnetz (35) angeschlossen sind, wobei die Schaltwandler bevorzugt jeweils als Last mit konstanter Leistung wirken.

8. Linearmotorsystem (11) nach einem der vorstehenden Ansprüche,
**dadurch gekennzeichnet,**
**dass** die Steuerungseinrichtung (37) dazu eingerichtet ist, zur Auswahl zumindest eines Elektromagneten (21), welcher mit Dämpfungsstrom bestromt werden soll, eine durch den Läufer (15) bei Bewegung des Läufers (15) in mehreren der Elektromagneten (21) hervorgerufene Induktionsspannung zu berücksichtigen.

9. Linearmotorsystem (11) nach einem der vorstehenden Ansprüche,
**dadurch gekennzeichnet,**
**dass** die Steuerungseinrichtung (37) dazu eingerichtet ist, zumindest zeitweise einen negativen Dämpfungsstrom (41) für zumindest einen Elektromagneten (21) zu erzeugen, um elektrische Energie in das Stromversorgungsnetz (35) einzuspeisen
und/oder
**dass** die Steuerungseinrichtung (37) dazu eingerichtet ist, zumindest zeitweise einen positiven Dämpfungsstrom (41) für zumindest einen Elektromagneten (21) zu erzeugen, um elektrische Energie aus dem Stromversorgungsnetz (35) abzuführen.

10. Linearmotorsystem (11) nach einem der vorstehenden Ansprüche,
**dadurch gekennzeichnet,**
**dass** das Linearmotorsystem (11) mehrere Segmente (13) aufweist, welche jeweils mehrere der Elektromagneten (21) umfassen, wobei die Steuerungseinrichtung (37) auf mehrere der Segmente (13) verteilt ist.

11. Linearmotorsystem (11) nach einem der vorstehenden Ansprüche,
**dadurch gekennzeichnet,**
**dass** ein Sensor vorgesehen ist, wobei der Sensor den Strom und/oder die Spannung in dem Stromversorgungsnetz (35) detektiert und in ein Sensorsignal umwandelt, wobei die Steuerungseinrichtung (37) einen Regelkreis zur Erzeugung des Dämpfungsstroms (41) umfasst, wobei der Regelkreis eine Nachbildung einer negativen Impedanz und eine Nachbildung eines Dämpfungsglieds umfasst.

12. Linearmotorsystem (11) nach Anspruch 11,
**dadurch gekennzeichnet,**
**dass** der Regelkreis eine Logik umfasst, welche aus einem Regelsignal, insbesondere basierend auf weiteren Randbedingungen, den Dämpfungsstrom (41) für die Elektromagneten (21) festlegt.

13. Linearmotorsystem (11) nach einem der vorstehenden Ansprüche,
**dadurch gekennzeichnet,**
**dass** das Linearmotorsystem (11) mehrere Segmente (13) umfasst, wobei jedes Segment (13) mehrere der Elektromagneten (21) umfasst, wobei die Segmente (13) aneinander gereiht angeordnet sind und eine umlaufende Führungsbahn (17) bilden, wobei die Führungsbahn (17) an einer Außenseite der jeweiligen Segmente (13) angeordnet ist.

14. Verfahren zum Betrieb eines Linearmotorsystems (11), insbesondere eines Transportsystems, z.B. Multicarrier,
wobei das Linearmotorsystem (11) umfasst:
eine Führungsbahn (17) mit einer Mehrzahl von entlang der Führungsbahn (17) verteilt angeordneten Elektromagneten (21), welche von einem Stromversorgungsnetz (35) mit elektrischer Energie versorgt werden;
wenigstens einen Läufer (15), der an der Führungsbahn (17) geführt und entlang dieser bewegbar ist und einen Antriebsmagneten (23) zum Zusammenwirken mit den Elektromagneten (21) der Führungsbahn (17) zum Bewegen des Läufers (15) umfasst; und
eine Steuerungseinrichtung (37) zur Steuerung der Bewegung des Läufers (15) relativ zur Führungsbahn (17) durch Bestromung eines Teils der Elektromagneten mittels eines Antriebsstroms (39),
wobei zumindest ein Teil der Elektromagneten (21) derart mit einem Dämpfungsstrom (41) bestromt wird, dass die Bestromung mit dem Dämpfungsstrom (41) einerseits in keiner zusätzlichen Bewegung und/oder keiner Veränderung der durch den Antriebsstrom (39) erzeugten Bewegung des Läufers (15) entlang der Führungsbahn (17) resultiert und/oder andererseits in keiner zusätzlichen Kraft auf den Läufer (15) und/oder keiner Veränderung der durch den Antriebsstrom (39) erzeugten Kraft auf den Läufer (15), insbesondere entlang der Führungsbahn (17), resultiert,
wobei die Bestromung mit dem Dämpfungsstrom (41) ausgeführt wird, um Oszillationen und/oder Strom- und Spannungsschwankungen in dem Stromversorgungsnetz (35) zu reduzieren,
**dadurch gekennzeichnet, dass** der Antriebsstrom (39) und der Dämpfungsstrom (41) sich in einem oder mehreren Elektromagneten (21) überlagern.

## Claims

1. A linear motor system (11), in particular a transport system, e.g. a multi-carrier,
comprising:
a guide track (17) having a plurality of electromagnets (21) which are arranged distributed along the guide track (17) and which are supplied with electrical energy from a power supply network (35);
at least one carrier (15) which is guided at and movable along the guide track (17) and which comprises a drive magnet (23) for cooperating with the electromagnets (21) of the guide track (17) to move the carrier (15); and
a control device (37) for controlling the movement of the carrier (15) relative to the guide track (17) by energizing some of the electromagnets by means of a drive current (39),
wherein the control device (37) is configured to energize at least some of the electromagnets (21) with a damping current (41) such that the energizing with the damping current (41) results, on the one hand, in no additional movement and/or no change in the movement of the carrier (15) along the guide track (17) generated by the drive current (39) and/or, on the other hand, in no additional force on the carrier (15) and/or no change in the force on the carrier (15) generated by the drive current (39), in particular along the guide track (17),
wherein the energizing with the damping current (41) is performed to reduce oscillations and/or current and voltage fluctuations in the power supply network (35),
**characterized in that**
the drive current (39) and the damping current (41) are superposed in one or more electromagnets (21).

2. A linear motor system (11) according to claim 1,
**characterized in that**
the control device (37) is configured to energize, by means of the damping current (41), at least some of those electromagnets (21) which do not effect a movement of the carrier (15), in particular along the guide track (17), at a respective point in time.

3. A linear motor system (11) according to claim 1 or 2,
**characterized in that**
the control device (37) is configured to impart the damping current (41) into electromagnets which are not flowed through by drive current (39) at a respective point in time.

4. A linear motor system (11) according to claim 1 or 2,
**characterized in that**
the control device (37) is configured to impart the damping current (41) into electromagnets (21) which are also energized with drive current (39).

5. A linear motor system (11) according to any one of the preceding claims 1, 2, or 4, **characterized in that**
the control device (37) is configured to reduce the drive current (39) in at least one of the electromagnets (21) by means of the damping current (41) and to impart damping current (41) into an adjacent electromagnet (21) for this purpose in order to compensate a changed force effect on the carrier (15) through the reduced drive current (39).

6. A linear motor system (11) according to any one of the preceding claims, **characterized in that**
the drive current (39) and damping current (41) imparted into the electromagnets (21) taken together are at least temporarily greater than the drive current (39) alone, with energy being stored in the electromagnets (21) by the greater total current.

7. A linear motor system (11) according to any one of the preceding claims, **characterized in that**
the electromagnets (21) are connected to the power supply network (35) by means of switching converters, with the switching converters preferably each acting as a load having a constant power.

8. A linear motor system (11) according to any one of the preceding claims, **characterized in that**
the control device (37) is configured to consider, for the selection of at least one electromagnet (21) which is to be energized with damping current, an induction voltage caused by the carrier (15) in a plurality of the electromagnets (21) on the movement of the carrier (15).

9. A linear motor system (11) according to any one of the preceding claims, **characterized in that**
the control device (37) is configured to generate a negative damping current (41) for at least one electromagnet (21) at least temporarily in order to feed electrical energy into the power supply network (35),
and/or
**in that** the control device (37) is configured to generate a positive damping current (41) for at least one electromagnet (21) at least temporarily in order to lead off electrical energy from the power supply network (35).

10. A linear motor system (11) according to any one of the preceding claims, **characterized in that**
the linear motor system (11) has a plurality of segments (13) which each comprise a plurality of the electromagnets (21), with the control device (37) being distributed over a plurality of the segments (13).

11. A linear motor system (11) according to any one of the preceding claims, **characterized in that**
a sensor is provided, with the sensor detecting the current and/or the voltage in the power supply network (35) and converting it into a sensor signal, with the control device (37) comprising a control loop for generating the damping current (41), with the control loop comprising a reproduction of a negative impedance and a reproduction of a damping member.

12. A linear motor system (11) according to claim 11,
**characterized in that**
the control loop comprises a logic which determines the damping current (41) for the electromagnets (21) from a control signal, in particular based on further boundary conditions.

13. A linear motor system (11) according to any one of the preceding claims, **characterized in that**
the linear motor system (11) comprises a plurality of segments (13), with each segment (13) comprising a plurality of the electromagnets (21), with the segments (13) being arranged in a row and forming a peripheral guide track (17), with the guide track (17) being arranged at an outer side of the respective segments (13).

14. A method of operating a linear motor system (11), in particular a transport system, e.g. a multicarrier,
wherein the linear motor system (11) comprises:
a guide track (17) having a plurality of electromagnets (21) which are arranged distributed along the guide track (17) and which are supplied with electrical energy from a power supply network (35);
at least one carrier (15) which is guided at and movable along the guide track (17) and which comprises a drive magnet (23) for cooperating with the electromagnets (21) of the guide track (17) to move the carrier (15); and
a control device (37) for controlling the movement of the carrier (15) relative to the guide track (17) by energizing some of the electromagnets by means of a drive current (39),
wherein at least some of the electromagnets (21) are energized with a damping current (41) such that the energizing with the damping current (41) results, on the one hand, in no additional movement and/or no change in the movement of the carrier (15) along the guide track (17) generated by the drive current (39) and/or, on the other hand, in no additional force on the carrier (15) and/or no change in the force on the carrier (15) generated by the drive current (39), in particular along the guide track (17),
wherein the energizing with the damping current (41) is performed to reduce oscillations and/or current and voltage fluctuations in the power supply network (35),
**characterized in that** the drive current (39) and the damping current (41) are superposed in one or more electromagnets (21).

## Revendications

1. Système de moteur linéaire (11), en particulier système de transport, par exemple système multi-chariots, comprenant :
une voie de guidage (17) ayant une pluralité d'électroaimants (21) répartis le long de la voie de guidage (17) et alimentés en énergie électrique par un réseau d'alimentation électrique (35) ;
au moins un curseur (15) qui est guidé sur la voie de guidage (17) et peut se déplacer le long de celle-ci et qui comprend un aimant d'entraînement (23) destiné à coopérer avec les électroaimants (21) de la voie de guidage (17) pour déplacer le curseur (15) ; et
un dispositif de commande (37) conçu pour commander le mouvement du curseur (15) par rapport à la voie de guidage (17) en alimentant une partie des électroaimants en un courant d'entraînement (39),
dans lequel
le dispositif de commande (37) est conçu pour alimenter au moins une partie des électroaimants (21) en un courant d'atténuation (41) de telle sorte que l'alimentation en courant d'atténuation (41) ne résulte d'une part en aucun mouvement supplémentaire et/ou en aucune modification du mouvement du curseur (15) généré par le courant d'entraînement (39) le long de la voie de guidage (17) et/ou d'autre part en aucune force supplémentaire sur le curseur (15) et/ou en aucune modification de la force générée par le courant d'entraînement (39) sur le curseur (15), en particulier le long de la voie de guidage (17),
l'alimentation en courant d'atténuation (41) est effectuée afin de réduire les oscillations et/ou les fluctuations de courant et de tension dans le réseau d'alimentation électrique (35),
**caractérisé en ce que**
le courant d'entraînement (39) et le courant d'atténuation (41) se superposent dans un ou plusieurs électroaimants (21).

2. Système de moteur linéaire (11) selon la revendication 1,
**caractérisé en ce que**
le dispositif de commande (37) est conçu pour alimenter en courant d'atténuation (41) au moins une partie des électroaimants (21) qui, à un moment donné, ne provoquent aucun mouvement du curseur (15), en particulier le long de la voie de guidage (17).

3. Système de moteur linéaire (11) selon la revendication 1 ou 2,
**caractérisé en ce que**
le dispositif de commande (37) est conçu pour appliquer le courant d'atténuation (41) aux électroaimants qui ne sont pas traversés par le courant d'entraînement (39) à un moment donné.

4. Système de moteur linéaire (11) selon la revendication 1 ou 2,
**caractérisé en ce que**
le dispositif de commande (37) est conçu pour appliquer le courant d'atténuation (41) aux électroaimants (21) qui sont également alimentés en courant d'entraînement (39).

5. Système de moteur linéaire (11) selon l'une des revendications précédentes 1, 2 ou 4,
**caractérisé en ce que**
le dispositif de commande (37) est conçu pour réduire le courant d'entraînement (39) dans l'un au moins des électroaimants (21) au moyen du courant d'atténuation (41) et, en contrepartie, pour appliquer le courant d'atténuation (41) à un électroaimant (21) voisin afin de compenser une modification de l'action de la force sur le curseur (15) due à la réduction du courant d'entraînement (39).

6. Système de moteur linéaire (11) selon l'une des revendications précédentes,
**caractérisé en ce que**
le courant d'entraînement (39) et le courant d'atténuation (41) appliqués aux électroaimants (21), pris ensemble, sont au moins temporairement plus importants que le courant d'entraînement (39) seul, et, grâce au courant total plus important, de l'énergie est stockée dans les électroaimants (21).

7. Système de moteur linéaire (11) selon l'une des revendications précédentes,
**caractérisé en ce que**
les électroaimants (21) sont connectés au réseau d'alimentation électrique (35) au moyen de convertisseurs de commutation, les convertisseurs de commutation agissant de préférence chacun comme une charge à puissance constante.

8. Système de moteur linéaire (11) selon l'une des revendications précédentes,
**caractérisé en ce que**
pour sélectionner au moins un électroaimant (21) qui doit être alimenté en courant d'atténuation, le dispositif de commande (37) est conçu pour prendre en compte une tension d'induction provoquée par le curseur (15) dans plusieurs des électroaimants (21) lors du mouvement du curseur (15).

9. Système de moteur linéaire (11) selon l'une des revendications précédentes,
**caractérisé en ce que**
le dispositif de commande (37) est conçu pour générer au moins temporairement un courant d'atténuation négatif (41) pour au moins un électroaimant (21), afin d'injecter de l'énergie électrique dans le réseau d'alimentation électrique (35),
et/ou
**en ce que** le dispositif de commande (37) est conçu pour générer au moins temporairement un courant d'atténuation positif (41) pour au moins un électroaimant (21), afin d'évacuer de l'énergie électrique du réseau d'alimentation électrique (35).

10. Système de moteur linéaire (11) selon l'une des revendications précédentes,
**caractérisé en ce que**
le système de moteur linéaire (11) comporte plusieurs segments (13) comprenant chacun plusieurs des électroaimants (21), le dispositif de commande (37) étant réparti sur plusieurs des segments (13).

11. Système de moteur linéaire (11) selon l'une des revendications précédentes,
**caractérisé en ce que**
il est prévu un capteur qui détecte le courant et/ou la tension dans le réseau d'alimentation électrique (35) et le/la convertit en un signal de capteur, le dispositif de commande (37) comprenant un circuit de régulation pour générer le courant d'atténuation (41), le circuit de régulation incluant une reproduction d'une impédance négative et une reproduction d'un élément d'atténuation.

12. Système de moteur linéaire (11) selon la revendication 11, **caractérisé en ce que**
le circuit de régulation comprend une logique qui détermine le courant d'atténuation (41) pour les électroaimants (21) à partir d'un signal de régulation, en particulier en se basant sur d'autres conditions limites.

13. Système de moteur linéaire (11) selon l'une des revendications précédentes,
**caractérisé en ce que**
le système de moteur linéaire (11) comprend plusieurs segments (13), chaque segment (13) comprenant plusieurs desdits électroaimants (21), lesdits segments (13) étant disposés en série et constituant une voie de guidage périphérique (17), ladite voie de guidage (17) étant disposée sur un côté extérieur des segments respectifs (13).

14. Procédé de fonctionnement d'un système de moteur linéaire (11), en particulier d'un système de transport, par exemple d'un système multi-chariots, le système de moteur linéaire (11) comprenant :
une voie de guidage (17) ayant une pluralité d'électroaimants (21) répartis le long de la voie de guidage (17) et alimentés en énergie électrique par un réseau d'alimentation électrique (35) ;
au moins un curseur (15) qui est guidé sur la voie de guidage (17) et peut se déplacer le long de celle-ci et qui comprend un aimant d'entraînement (23) destiné à coopérer avec les électroaimants (21) de la voie de guidage (17) pour déplacer le curseur (15) ; et
un dispositif de commande (37) conçu pour commander le mouvement du curseur (15) par rapport à la voie de guidage (17) en alimentant une partie des électroaimants en un courant d'entraînement (39),
dans lequel
au moins une partie des électroaimants (21) sont alimentés en courant d'atténuation (41) de telle sorte que l'alimentation en courant d'atténuation (41) ne résulte d'une part en aucun mouvement supplémentaire et/ou en aucune modification du mouvement du curseur (15) généré par le courant d'entraînement (39) le long de la voie de guidage (17) et/ou d'autre part en aucune force supplémentaire sur le curseur (15) et/ou en aucune modification de la force générée par le courant d'entraînement (39) sur le curseur (15), en particulier le long de la voie de guidage (17),
l'alimentation en courant d'atténuation (41) est effectuée afin de réduire les oscillations et/ou les fluctuations de courant et de tension dans le réseau d'alimentation électrique (35),
**caractérisé en ce que**
le courant d'entraînement (39) et le courant d'atténuation (41) se superposent dans un ou plusieurs électroaimants (21).
